**Europäisches Patentamt**

**European Patent Office**

**Office européen des brevets**

(11) Publication number : **0 427 571 B1**

# EUROPEAN PATENT SPECIFICATION

(45) Date of publication of patent specification :
**18.10.95 Bulletin 95/42**

(51) Int. Cl.⁶ : **H02P 7/63, H02P 7/628**

(21) Application number : **90312301.6**

(22) Date of filing : **09.11.90**

(54) **AC motor control.**

Divisional application 94202372.2 filed on 09/11/90.

(30) Priority : **10.11.89 JP 292839/89**

(43) Date of publication of application :
**15.05.91 Bulletin 91/20**

(45) Publication of the grant of the patent :
**18.10.95 Bulletin 95/42**

(84) Designated Contracting States :
**DE FR SE**

(56) References cited :
PATENT ABSTRACTS OF JAPAN, vol. 10, no. 164, (E-410)(2220), June 11, 1986; & JP-A-61 15 588
PATENT ABSTRACTS OF JAPAN, vol. 12, no. 265 (E-637), July 23, 1988; & JP-A-63 048 197
PATENT ABSTRACTS OF JAPAN, vol. 7, no. 76 (E-167), March 30, 1983; & JP-A-58 006 092

(73) Proprietor : **KABUSHIKI KAISHA TOSHIBA**
**72, Horikawa-cho,**
**Saiwai-ku**
**Kawasaki-shi, Kanagawa-ken 210, Tokyo (JP)**

(72) Inventor : **Nakamura, Yoshinobu, c/o Intellect.**
**Property Div.**
**Toshiba Corporation,**
**1-1-1, Shibaura**
**Minato-ku, Tokyo (JP)**
Inventor : **Mochikawa, Hiroshi, c/o Intellect.**
**Property Div.**
**Toshiba Corporation,**
**1-1-1, Shibaura**
**Minato-ku, Tokyo (JP)**

(74) Representative : **BATCHELLOR, KIRK & CO.**
**2 Pear Tree Court**
**Farringdon Road**
**London EC1R 0DS (GB)**

EP 0 427 571 B1

## Description

This invention relates to a control device for an AC motor using an inverter circuit.

Control devices for AC motors may be of very many different types, depending on the type of the AC motor to be controlled.

This invention is concerned with a device for controlling induction motors and brushless motors equipped with a rotor of the permanent magnet type.

First of all, a prior art device for controlling a brushless motor will be described.

To control brushless motors, instead of employing a position detection element such as a Hall element to detect the relative position of the stator winding and permanent magnet type rotor, a system has come to be employed wherein this position is detected by using the terminal voltages, which contain the induced voltages generated in the stator winding.

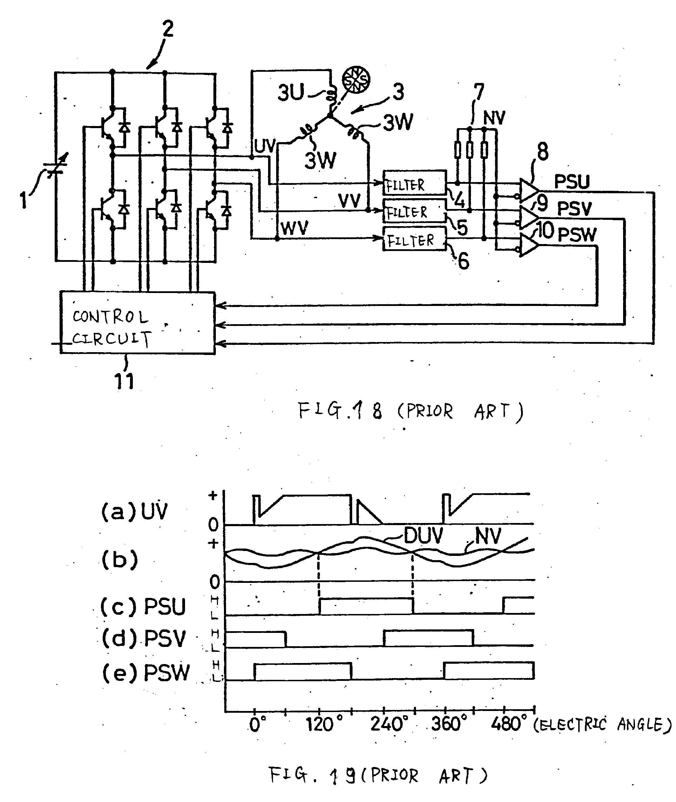

A prior art example of this is shown in Fig. 18. 1 is a DC current source. 2 is an inverter circuit for passing current to stator windings 3U, 3V and 3W of brushless motor 3. 4, 5 and 6 are filter curciut that shift by 90 degress the phase of terminal voltages UV, VV, and WV containing the induced voltages generated in stator windings 3U, 3V and 3W. 7 is a detection circuit whereby the neutral point voltage NV is obtained from the output signals of these filter circuits 4 to 6. 8, 9 and 10 are comparators that respectively compare the output signals of filter circuits 4 to 6, which constitute first order delay elements, and neutral point voltage NV. 11 is a control circuit.

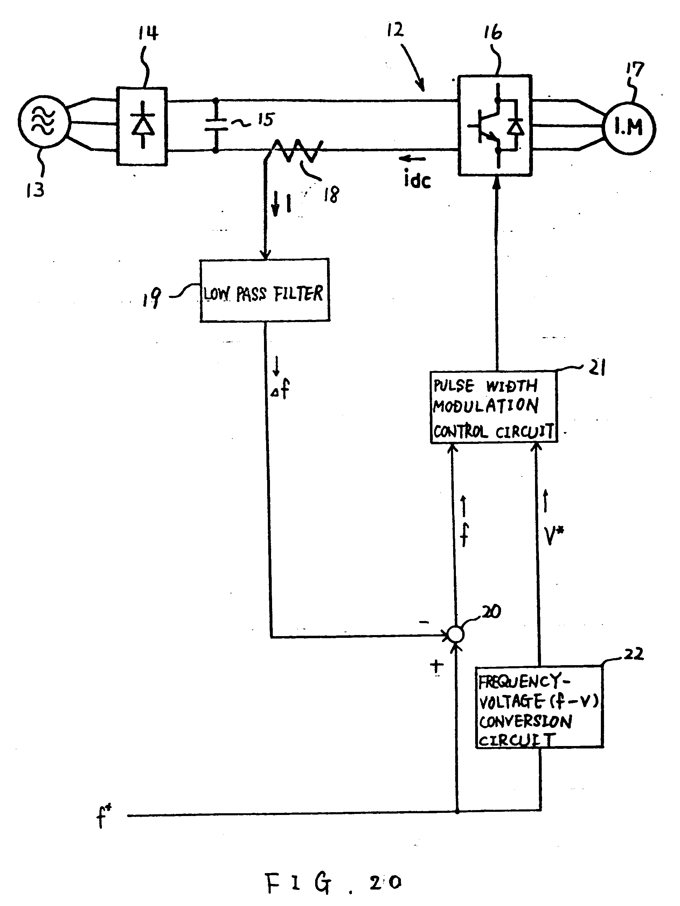

Fig. 19 is a time chart showing the operation of the prior art example. We shall now consider the U phase with reference to this time chart. During commutation of the inverter circuit 2 the terminal voltage UV (see Fig. 19 (a)) generated in stator winding 3U contains a voltage spike that is produced by conduction of the opposite arm return flow diode. In order to eliminate the effect of this voltage spike component, the terminal voltage UV is shifted in phase by 90 degrees by means of filter circuit 4, producing the phase-shifted voltage DUV as shown in Fig. 19 (b). After this, this phase-shifted voltage DUV and the neutral point voltage NV shown in Fig. 19(b) are compared by comparator 8, to obtain a phase detection signal PSU as shown in Fig.19C. The situation is the same for the other phases V and W, position detection signals PSV and PSW being obtained as shown in Fig.19 (d) and (e) from comparators 9 and 10, based on terminal voltages VV and VW. These position detection signals PSU, PSV and PSW are signals that are 120 degrees different in phase for 180 degrees conduction. By applying these to control circuit 11, this control circuit 11 is made to produce six commutation signals, which are applied to the bases of the transistors that constitute the switching elements of inverter circuit 2.

However, in the device described above for controlling a brushless motor, since filter circuits 4 to 6 having a 90 degrees lagging phase characteristic are provided in order to remove the voltage spike component contained in terminal voltages UV, VV and VW, the time constants of filter circuits 4 to 6 are large. This gives rise to the problem that it is not possible to track rapid acceleration or deceleration. A further problem is that phase detection in the low speed region is difficult. Furthermore, the size of the voltage spike component contained in terminal voltages UV, VV and WV varies depending on the magnitude of the current, i.e., the load of stator windings 3U, 3V and 3W, so if the load fluctuation is large, a phase error is produced in the signal waveform of filter circuits 4 to 6 et seq, causing a stability problem.

Next, a device for controlling a three-phase induction motor will be described.

This type of conventional device is disclosed Japanese Laid Open Patent Publication No. sho. 62-100192, and is illustrated in Fig. 20.

A voltage type PWM inverter 12 consists of a rectifier circuit 14 that rectifies the three-phase AC voltage of three-phase AC power source 13, a smoothing capacitor 15 that smooths this rectified voltage, and a main inverter circuit 16 to which this smoothed DC voltage is applied. The AC output voltage from main inverter circuit 16 is then applied to three-phase induction motor 17. The current Idc flowing in the DC bus of inverter 12 is detected by current detector 18 and supplied as detection current I to low pass filter (hereinbelow termed "LPF")19. LPF 19 extracts the fundamental wave of the detected current I and outputs it as frequency correction value DELTA f. Subtractor 20 subtracts this frequency correction value DELTA f from the frequency command value f* to give a reference frequency value f (= f* - DELTA f), which is applied to a pulse width modulation (PWM) control circuit 21. This pulse width modulation control circuit 21 is supplied with a voltage command value V* obtained by converting the frequency command value f* by means of a frequency-voltage (f - V) conversion circuit 22. As a result, pulse width modulation control circuit 21 performs pulse width modulation control by applying a base signal to the power transistors of main inverter circuit 16, based on reference frequency value f and voltage command value V*.

Thus, since, in a voltage type PWM inverter, the DC voltage is fixed, the mean value of the current flowing in the DC bus of inverter 12 is proportional to the power supplied to three-phase induction motor 17. In this case, assuming that the rotational speed of three phase induction motor 17 is sufficiently high, and that the rate of change of the speed of rotation is very small, torque fluctuation is proportional to power fluctuation, so, by controlling the mean current of the DC bus of inverter 12, torque control of three-phase induction motor 17 can be performed, and production of vibration can be prevented.

However, although the above control device is effective when the speed of revolution of the three phase induction motor 17 is sufficiently high, and the ratio of variation of speed of revolution is very small, in low speed operation, when the speed of revolution is low, the amount of power change for a given change of torque falls off. Even if this is therefore compensated by dividing by the speed of rotation or by the inferred value of the speed of rotation so as to remove dependence on the speed of operation, the lowered S/N ratio means that sufficient accuracy is not obtained. Stable driving of the inverter during low speed operation is therefore difficult.

This invention was made after consideration of the above circumstances. Its first object is to provide a control device for an AC motor providing good response characteristics and improved stability during sudden accelerations or decelerations and load fluctuations, by controlling the AC motor in accordance with the amount of change of current. Its second object is to provide a control device for an AC motor whereby the AC motor can be driven in a stable manner even during low speed operation.

Patent Abstracts of Japan corresponding to JA-A-61015588, discloses current detectors respectively detect currents $I_D$, $I_A$. A subtractor subtracts a current $I_2'$ at no load time by the current $I_D$. A calculator calculates the ratio of the current $I_D'$ to the current $I_A$, and generates a control signal (c) only when lower than a power factor set value $cos\phi*$. A voltage controller outputs a voltage command (v) output from a controller to an inverter while the signal (c) is not input as it is as V', and when the signal (c) is input, the predetermined value Vc is output as v' instead of a voltage command (v). Thus, the induction motor is always operated in such a manner that the power factor of the set value $cos\phi*$ or higher is held, thereby preventing the induction motor from generating an overexcitation.

Patent Abstracts of Japan corresponding to JA-A 58006092 discloses a DC current transformer disposed in the state insulated from a DC bus in the bus. The transformer is connected to a DC current detector circuit, which is connected to an induction motor controller which outputs a gate signal for controlling the gate of an inverter. A frequency instruction potentiometer for setting a frequency f responsive to the target rotating speed of an induction motor and a microcomputer as an arithmetic circuit are connected to the controller. The detector circuit has a DC current detector, an inverting amplifier connected to the transformer, an inverter, the first half-wave rectifying filter, the second half-wave rectifying filter, the second half-wave rectifying filter, a comparator, a gate switching circuit, an inflowing component amplifier and an outflowing component amplifier.

Patent Abstracts of Japan corresponding to JA-A-63048197 discloses current iA flowing to an inverter from a smoothing condenser, and returning current iB are detected by a direct current transformer 9, and are reset to be of average values IA, IB by an IA, IB detection circuit. The input of the values to a microcomputer is provided, and a function delta is computed and controlled according to a power factor cos phi. In this case in the low frequency area (fmin-fl) of the poor detecting precision of the power factor, the voltage of a ratio V/f on rating is set to be a lower-limit limiter, and in the area of frequency ranging from f1 to nf1, voltage rated in the frequency f1 is set to be the lower-limit limiter, and in the area ranging from the frequency nf1 to maximum frequency fmax, 1/n of the voltage of a ratio V/f on the rating is set to be the lower-limit limiter.

According to a first aspect of the present invention there is provided a control device for an AC motor comprising a source of DC power and inverter means for converting said DC power into AC power and supplying the AC voltage to the AC motor;

DC current detection means adapted to detect the current flowing from said DC power source to said inverter means in the DC side of said inverter means;

sample and hold signal generating means that generates a sample and hold signal from control signals from voltage and frequency calculating means and drive signals from control means, wherein said drive signals invert at a prescribed phase angle determined by the output frequency of said inverter means;

current sample and hold means that samples and holds the DC current signal from said DC current detection means under the control of said sample and hold signal;

power factor calculation means connected to said DC current detection means for calculating the power factor of the AC motor from the detected current and producing a corresponding power factor signal;

voltage and frequency calculating means which receives as input signals the calculated power factor signal and a speed setting signal and produces said control signals calculated from the input signals;

control means which receives said control signals and generates said drive signals to control the inverter means based on the control signals.

According to a second aspect of the invention there is provided a control device for an AC motor comprising a source of DC power and inverter means for converting said DC power into AC power and supplying the AC voltage to the AC motor;

current detection means for detecting the current flowing from said DC power source to said inverter means and generating a signal representative of the current flow;

power factor calculation means connected to the current detection means for calculating the power factor of the AC motor from the detected current and producing a corresponding power factor signal;

adder means for receiving the power factor signal and adding to it a predetermined signal;

proportional integrating means for proportionally integrating the output of the adder means;

voltage frequency calculation means which receives a predetermined reference signal and generates a reference voltage signal;

control means which receives the output of the proportional integrating means, the reference voltage signal, and the predetermined reference signal and produces a control signal to control the inverter means.

Some embodiments of the invention will now be described by way of example with reference to the accompanying drawings in which:

Fig. 1 is a block diagram showing the overall electrical layout of a first embodiment of the present invention;

Fig. 2 is a block diagram showing an example layout of a voltage frequency calculation circuit of the first embodiment of the present invention;

Fig. 3 is a block diagram showing an example layout of a current detection circuit of the first embodiment of the present invention.

Fig. 4 is a waveform diagram of a DC current signal under conditions of different power factor of the first embodiment of the present invention.

Fig. 5 is a signal waveform diagram showing the action of a current detection circuit of the first embodiment of the present invention;

Fig. 6 is a block diagram showing an example layout of a voltage frequency calculation circuit according to a second embodiment of this invention;

Fig. 7 is a block diagram showing the overall electrical layout of a third embodiment of this invention;

Fig. 8 is a graph showing the load characteristic of a permanent magnet type motor under sudden change of load in the third embodiment of this invention.

Fig. 9 to Fig. 11 are views showing the action of the current mean value calculation means of load of the third embodiment of this invention;

Fig. 12 is a block diagram showing the overall electrical layout of a fourth embodiment of this invention;

Fig. 13 is a view showing the relationship between output frequency and compensation amount of a fourth embodiment of this invention;

Fig. 14 is a block diagram showing a fifth embodiment of this invention

Fig. 15 is a current waveform diagram illustrating the operation of the fifth embodiment of this invention;

Fig. 16 is a block diagram of the overall electrical layout of a sixth embodiment of the invention;

Fig. 17 is a block diagram showing the overall electrical layout of a seventh embodiment of the invention;

Fig. 18 is an electrical layout diagram of a first example of a prior art control circuit;

Fig. 19 is a signal waveform diagram of the various parts of the first prior art example;

Fig. 20 is a block diagram showing a second example of prior art.

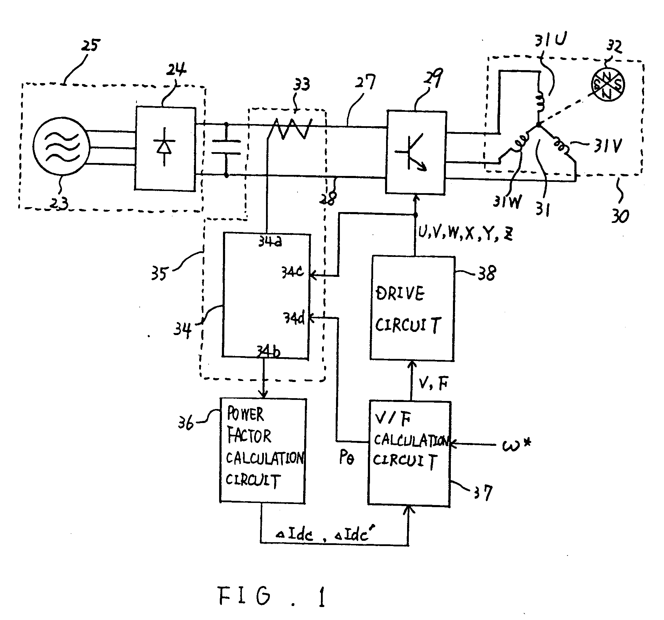

Referring to the drawings, a first embodiment of this invention applied to a control device for a permanent magnet type brushless motor will be described with reference to Figs. 1 through 5.

The overall layout will be described with reference to Fig. 1. A three-phase AC power source 23 is provided whose three-phase AC voltage is supplied to the AC input terminal of a full wave rectifier circuit 24 consisting of six diodes in a three-phase bridge connection. The DC output voltage of this full wave rectifier circuit 24 is applied to DC buses 27 and 28 through a smoothing capacitor 26 constituting therewith a DC power source 25. 29 is an inverter circuit consisting of six switching elements constituted by transistors connected in three-phase bridge fashion, its input terminal being supplied wiht the DC voltage between DC buses 27 and 28. A three-phase four-pole brushless motor 30 is provided which is equipped with a permanent magnet type rotor 32 and a stator 31 provided with U, V and W-phase stator windings 31U, 31V and 31W. Stator windings 31U, 31V and 31W are star-connected, and are supplied with the AC output voltages from the output terminals of inverter circuit 29. A current detector 33 consists of a Hall detector CT, which is arranged in a DC part 27 of inverter circuit 29.

The DC current signal Idc detected by current detector 33 is suplied to the input terminal 34a of current detection circuit 34. The output I of this current detection circuit 34 is fed to power factor calculation circuit 36. As will be described this power factor calculation circuit 36 is such that, based on the DC current signal Idc, a power factor signal DELTA Idc and current change amount DELTA Idc' are output as signals from its output terminals and applied to the input terminals of V/F calculation circuit 37 constituting voltage frequency (V/F) calculation means. Also as will be described, this V/F calculation circuit 37 calculates the voltage signal V, frequency signal F and pulse signal Pe from the power factor signal DELTA Idc, current change amount DELTA Idc' and a speed command value omega* that is supplied from a setting device, not shown. Voltage signal V and frequency signal F are output from its output terminals and supplied to the input terminals of drive circuit 38. Pulse signal P is supplied to input terminal 34d of current detection circuit 34. Drive circuit 38 outputs six drive signals U, V, W, X, Y, Z which are PWM-control led in accordance with the voltage signal V and frequency signal F, from its output terminals, and supplies these to the bases of the six transistors of inverter circuit 29. Rotor 32 of brushless motor 30 is thereby made to rotate at the rotational speed designated by speed command value omega*. Also, these drive signals U, V, W, X, Y and Z are supplied to the input terminal 34c of current detection circuit 34.

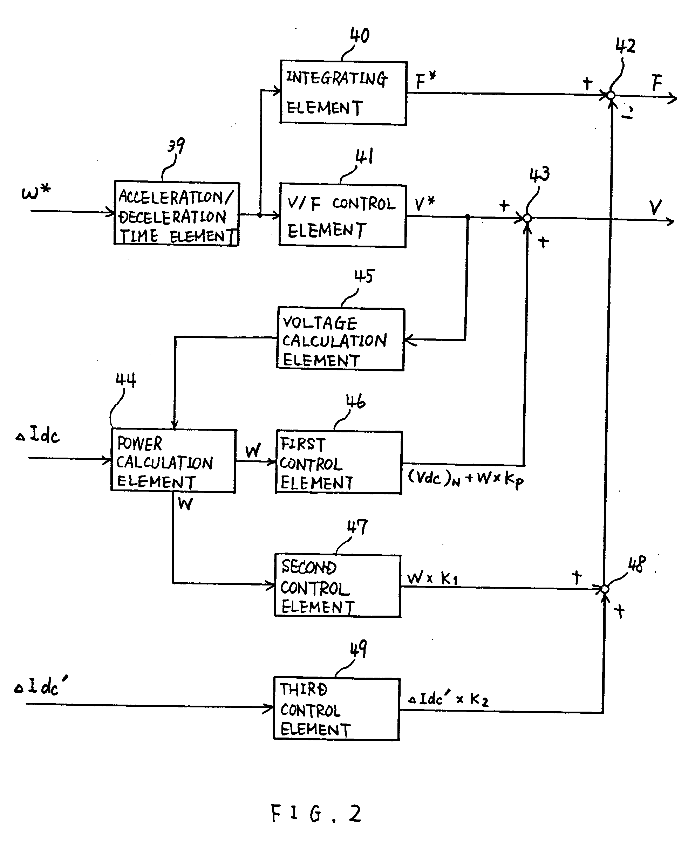

An example layout of V/F calculation circuit 37 will now be described with reference to Fig. 2. The speed command value omega* is supplied to each of the input terminals of integrating element 40 and V/F control element 41 through acceleration/deceleration time element 39. Integrating element 40 outputs frequency command signal F* from its output terminal and supplies it to the positive(+) input terminal of subtractor 42. V/F control element 41 outputs a voltage command signal V* from its output terminal and supplies it to one of the positive (+) input terminals of adder 43. Power factor signal DELTA Idc is supplied to one of the input terminals of power calculation element 44, and the other input terminal of power calculation element 44 is supplied with voltage command signal V* through voltage calculation element 45, so that this power calculating element 44 calculates the power value W and outputs it from its output terminal. This calculated power value W is supplied to the other positive (+) input terminal of adder 43 through first control element 46, and through second control element 47 is supplied to one positive (+) input terminal of adder 48. Current change amount DELTA Idc' is supplied to the other positive (+) input terminal of adder 48 through a third control element 49. The result of the addition performed by this adder 48 is output from its output terminal and supplied to the negative (-) input terminal of a subtractor 42.

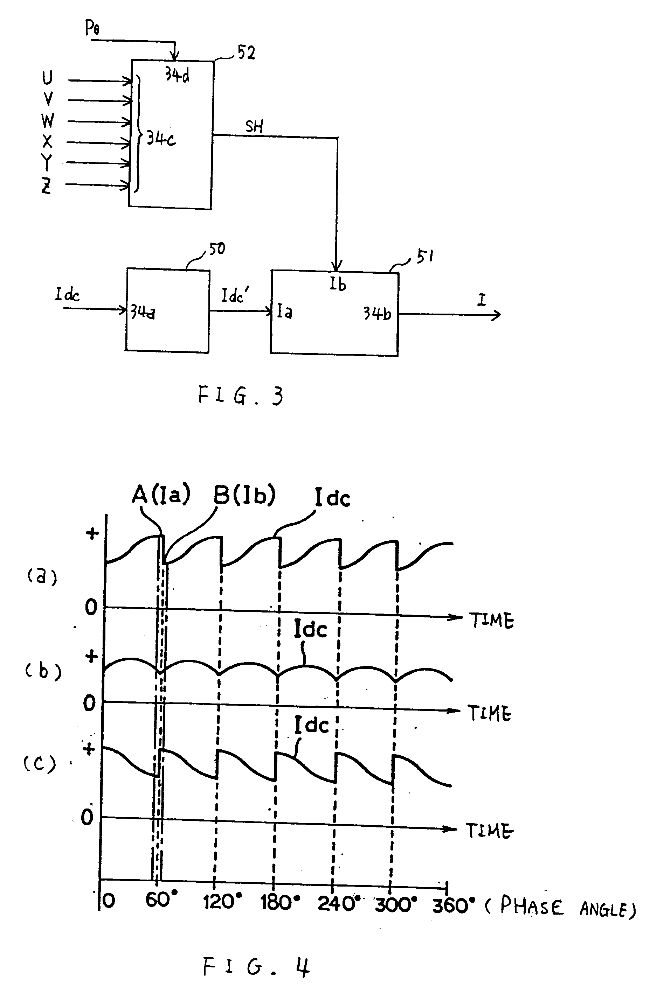

An example layout of current detection circuit 34 will now be described with reference to Fig. 3. A current amplification circuit 50 forms, together with current detector 33, a current detection means. Its input terminal 34a is supplied with the above mentioned DC current signal Idc, with the result that DC current signal Idc' obtained by amplifying this is output from its output terminal and supplied to input terminal Ia of a current sampling and hold means constituted by a current sampling and hold circuit 51. A current sampling and hold signal generating means 52 is constituted by a current sampling and hold signal generating circuit, whose input terminals 34c are supplied with drive signals U, V, W, X, Y, and Z, whose input terminal 34d is supplied with a pulse signal Pe, and whose output terminal O outputs a sampling and hold signal SH, which is supplied to input terminal Ib of current sampling and hold circuit 51. As will be described, by its sampling and hold action, this current sampling and hold circut 51 output detection current signals I for each phase from its output terminal 34b.

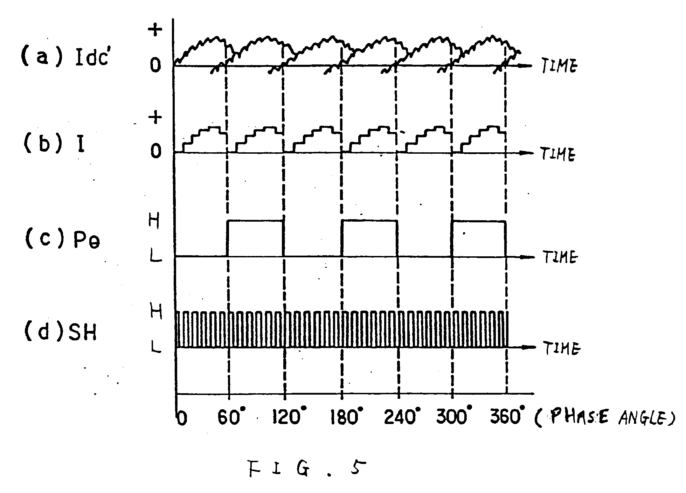

The operation of this embodiment will now be described with reference to Fig. 4 and Fig. 5.

Fig. 4 shows the effect of change of power factor on the waveform of DC signal Idc of current detection means 35, in the case where power factor control by inverter circuit 29 is not carried out. Specifically, when the power factor lags, as shown in Fig. 4(a), the waveform changes with a period of 1/6 (60 degrees in terms of electric angle) of the output frequency, and its change shows a rise on the right. In contrast, when the power factor is leading, as shown in Fig. 4(c), the waveform changes with the same period, but its change shows a fall on the right. When the power factor is about 1, as shown in Fig. 4(b), a waveform is obtained showing practically no change. The wavefom of DC signal Idc therefore varies in a manner which is repeated at electric angle intervals of 60 degrees. Considering time points (0 degrees, 60 degrees, 120 degrees, 180 degrees, ...360 degrees) at 60 degrees intervals of electric angle, a brushless motor 30 can be operated as shown in Fig. 4(b) such that the power factor is approximately unity, by detecting the difference (Ib - Ia) of the current Ia at a point A immediately in front of each one of these time points, and the current Ib at a point B immediately after each one of these time points, and effecting control such that this difference is zero, i.e. such that currents Ia and Ib are equal. That is, the same operation can be performed as in the conventional brushless motor system in which the positions of the magnetic poles are detected from the terminal voltages of the stator windings.

Example waveforms at each part are shown in Fig. 5. Fig. 5(a) shows the DC current signal Idc' through the DC amplification circuit 50 corresponding to Fig. 4(a). The waveform is extremely complex, owing to the fact that PWM control is effected by means of inverter circuit 29. It is therefore not easy to detect the change in DC current signal Idc with a period of 1/6 of the output frequency as shown in Fig. 4 from the DC current signal Idc' as shown in Fig. 5(a).

Accordingly, the following process is performed. Drive circuit 38 supplies PWM-controlled drive signals U, V, W, X, Y, Z, and V/F calculation circuit 37 supplies a pulse signal Pe (see Fig. 5(c)) that is inverted between low level and high level with a period of 1/6 of the output frequency of inverter circuit 29 to current detection circuit 34, respectively. In this current detection circiut 34, DC amplification circuit 50 is supplied with the DC current signal Idc from current detector 31, which it amplifies and outputs as DC current signal Idc'. Current sampling and hold signal generating circuit 52 inputs drive signals U, V, W, X, Y, Z and pulse signal Pe and outputs sampling and hold signal SH as shown in Fig. 5(d). In response to the input of DC current signal Idc' and sampling and hold signal SH, current sampling and hold circuit 51 samples and holds the values of DC current signal Idc' every time the sampling and hold signal SH becomes high level. In this case, sampling and hold signal SH is output such that for example the first high level period (phase angle 0 degrees to 60 degrees) of pulse signal Pe is synchronized with the drive signal for the U phase, and the next low level period (phase angle 120 degrees to 180 degrees) is synchronized with the drive signal for the W phase, this process being carried out repetitively. Thus the detection current signal I of current sampling and hold circuit 51 is current signal IV, IV and IW for the in, V and W phases respectively. This detection current signal I is applied to power factor calculation circuit 36.

Thus, power factor calculation circuit 36 detects the detection current signal I that is applied from current detection means 35 with a fixed sampling period, and calculates a power factor signal DELTA Idc as the value (Ib - Ia) arrived at by subtracting current Ia from current Ib immediately after each electric angle of 60 degrees, and also calculates the current change DELTA Idc' during this electric angle of 60 degrees. Thus the power factor signal DELTA Idc indicates the power factor by positive (+) or negative (-) current values, instead of indicating the power factor itself.

On the other hand, in V/F calculating circuit 37, when speed command value omega* is applied to acceleration/decleration time element 39, the output of acceleration/deceleration time element 39 rises with an arbitrary acceleration/deceleration time specified by speed command value omega*. This is integrated by integrating element 40 and output as frequency command signal F*. This is then compared with an arbitrary V/F pattern by V/F control element 41 to obtain a voltage command signal V* as output. Voltage command signal V* is multiplied by a suitable coefficient by voltage calculating element 45 and supplied to power calculating element 44 as a voltage value. This power calculation element 44 multiplies the voltage value from voltage calculating element 45 with power factor signal DELTA Idc and coefficient X and outputs the result as power value W. Power value W is therefore given by:

$$W = V* \times DELTA\ Idc \times K \quad (1)$$

First control element 46, that is supplied with this power value W, finds the voltage component value Vdc of power value W by calculation, and carries out proportional integration processing:

$$W \times Kp \text{ (where Kp is a constant)} \quad (2)$$
$$(Vdc)N = (Vdc)N - 1 + W \times K1 \quad (3)$$

(where K1 is a coefficient and N > 1 and is integer).

From expression (1) and expression (2), proportional integral control

$$(Vdc)N + W \times Kp \quad (4)$$

is performed. This is supplied to adder 43. Adder 43 calculates a voltage signal V as:

$$V = V* + (Vdc)N + W \times Kp \quad (5)$$

by converting the above expression (4) and the voltage command signal V*. Expression (4) above is what is known as the proportional integration (PI) control expression. As is clear from equation (5), when the power value W is positive i.e. when the power factor signal DELTA Idc is positive, the current value Ib at point B in Fig. 4 is larger than the current value Ia at point A, so the power factor is a leading power factor, causing voltage signal V to rise. In contrast, when the power value W is negative, i.e. when the power factor signal DELTA Idc is negative, the current value Ib at point B in Fig. 4 is smaller than the current value Ia at point A so the power factor is a lagging power factor, causing voltage signal V to drop. It should be noted that although, in this voltage control PI control was performed as shown by expression (4), depending on the application, proportional integral differential (PID) control could be performed. Also, second control element 47 is supplied with power value W, and performs a multiplication:

$$W \times K1 \text{ (where K1 is a coefficient)} \quad (6)$$

This second control element is controlled every electric angle of 60 degrees. Furthermore, a third control element 49 is supplied with current change value DELTA Idc', and performs the multiplication:

$$DELTA\ Idc' \times K2 \text{ (where K2 is a coefficent)} \quad (7)$$

This third control element 49 is controlled in continuous fashion. After this, the outputs of these control elements 47 and 49 indicated by expressions (6) and (7) are added by adder 48 and then supplied to subtractor 42. Subtractor 42 performs a subtraction:

$$F = F* - (W \times K1 + DELATA\ Idc' \times K2) \quad (8)$$

as a result of which a frequency signal F is output. That is, when power value W or current change amount DELTA Idc' increases, frequency signal F becomes small, causing the output frequency of inverter circuit 29 to fall. In contrast, when power value W or current change amout DELTA Idc' decreases, frequency signal F gets bigger, causing the output frequency of inverter circuit 29 to rise. Thus phase control is effected in response to increase or decrease of current, i.e. in response to load fluctuation, and stable control can be performed even for abrupt load fluctuations. Thus, V/F calculation circuit 37 calculates the amount of increase or amount of decrease determined by the feedback amount in response to change of the voltage command signal V* determined by speed command value omega* and the frequency command signal F* and DC current signal Idc. As a result, it delivers a voltage signal V and frequency signal F as output. Operation of brushless motor 30 is thereby controlled in response to these, through drive circuit 38 and inverter circuit 29, such that the power factor is approximately 1.

The following benefits can be obtained with the embodiment described above.

Specifically, the current flowing in the DC side of inverter circuit 29 constituted by DC bus 27 is detected by current detection means 35. Power factor calculaton circuit 36 then caluculates power factor signal DELTA Idc and current change amount DELTA Idc' from the change in this detected detection current signal I, and V/F calculating circuit 37 calculates a voltage signal V and frequency signal F using the result of this calculation and the speed command value omega*. Thus the operation of brushless motor 30 is controlled using this voltage signal V and frequency signal F through drive circuit 38 and inverter circuit 29 such that the power factor is approximately 1. The advantages of this are that, in contrast to the prior art, in which the terminal voltages of the stator windings were employed for this purpose, there is no need to use a first order delay element constituted by a filter circuit. The result of this is that good response to abrupt acceleration or deceleration and load fluctuations can be obtained.

Accordingly, stability can be improved and there is an excellent response to external disturbance. Thus detection can be performed even in the low speed region and an increased range of control obtained. Furthermore, detected current signal 1 from current sampling and hold circuit 51 is output by sampling and holding the DC current signal Vdc' of the current detection means 35 that detects the current of the DC side (i.e. DC bus 28) of inverter circuit 29. The sampling and hold signal SH that is used for this purpose is obtained from a pulse signal, inverted with a period of 1/6 (phase angle 60 degrees) of the output frequency and from drive signals in, U, W, X, Y, Z. The power factor can therefore be detected from the change of the waveform of this detected current signal I. It is therefore possible to control current feedback of brushless motor 30, and only a single current detection means 35 need be provided for this purpose. This facilitates signal processing in comparison with the prior art, with the advantages of lower cost and a reduced requirement for mounting space.

Furthermore, DC current signal Idc' of current detection means 35 can serve both for detection and protection from overcurrent and overload, as well as (for measurement for output display purposes. It is therefore possible to achieve the different objects of current feed back control, protection against overcurrent and overload, and measurement by a single current detection means 35. This further reduces costs and greatly reduces the amount of mounting space required.

The detection current signal I of current sampling and hold circuit 51 is detected as current signals Iu, Iv and Iw for each phase U, V and W. A layout could therefore be adopted to perform for example PWM control of inverter circuit 29, as conventionally, by obtaining a current command signal by detecting the difference between the speed command signal and the detected speed signal of brushless motor 20. PWM control is then carried out in accordance with the magnitude of a deviation current value obtained by calculating the deviation between this current command signal which is thus obtained and currents Iu, Iv and Iw flowing in each phase of the brushless motor 20.

Although in the above embodiment the case was described where a three-phase synchronous electric motor was used as the AC electric motor, multi-phase electric motors other than this could be employed. In such cases, inversion of pulse signal Po is performed at intervals of a prescribed electric angle set by the number of phases, instead of being performed at intervals of electric angle of 60 degrees.

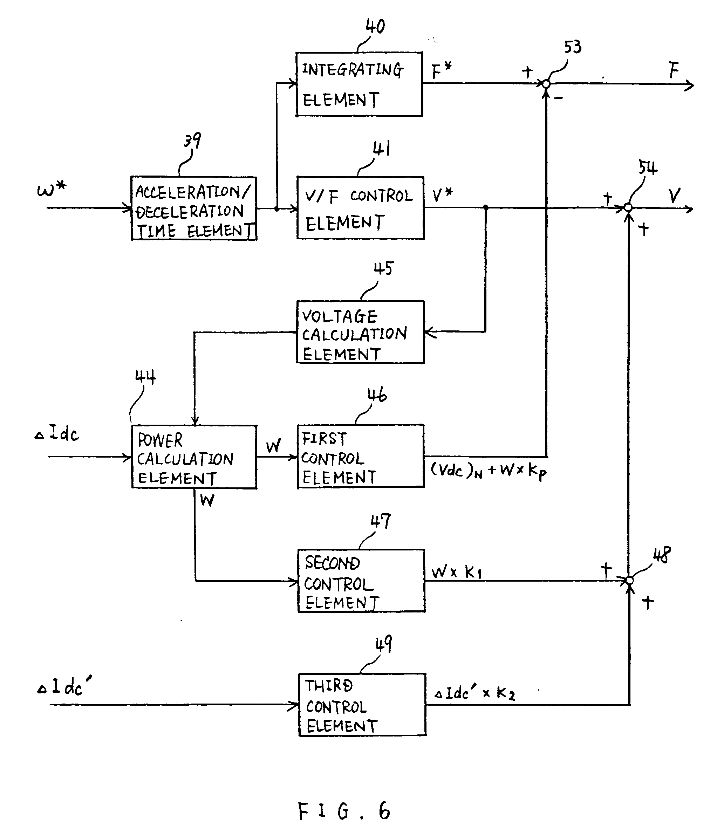

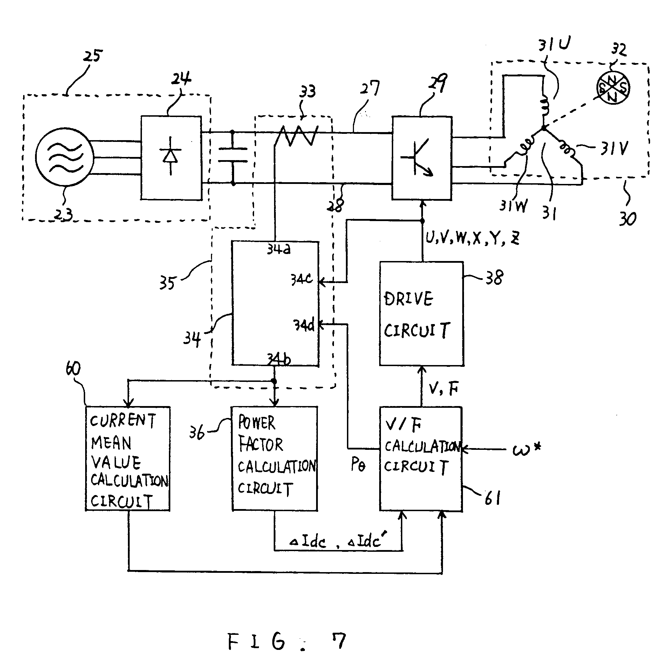

A second embodiment of this invention will now be described with reference to Fig. 6.

Parts which are the same as those in Fig. 2 are given the same reference numerals. The difference in Fig. 2 lies in that the output of integrating element 40 and the output of first control element 45 are respectively applied to the positive (+) input terminal and the negative (-) input terminal of subtractor 53, and the output of V/F control element 41 and the output of adder 48 are respectively applied to one and the other positive (+) input terminals of adder 54.

As a result, the voltage signal V that is output from adder 54 is:

$$V = V* + (W \times K1 + DELTA\ Idc' \times K2) \quad (9)$$

and the frequency signal F that is output from subtractor 53 is:

$$F = F* - [(Vdc) + W \times Kp] \quad (10)$$

so that the frequency signal F provides PI control.

The result is that, whereas, in the first embodiment, mainly voltage control was performed in respect of load fluctuations, in this second embodiment, mainly phase control is performed in respect of load fluctuations.

It should be noted that, although in the above embodiments the drive devices were indicated in the Figures by blocks of respective functions, for example power factor calculation circuit 36 and V/F calculation circuit 37 could alternatively be implemented in a microcomputer.

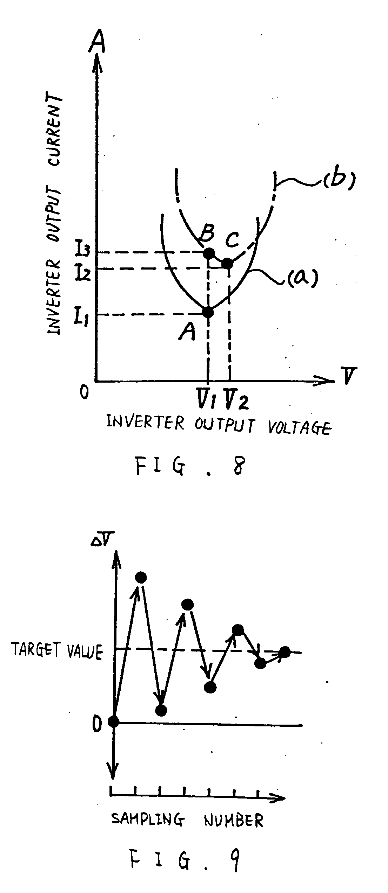

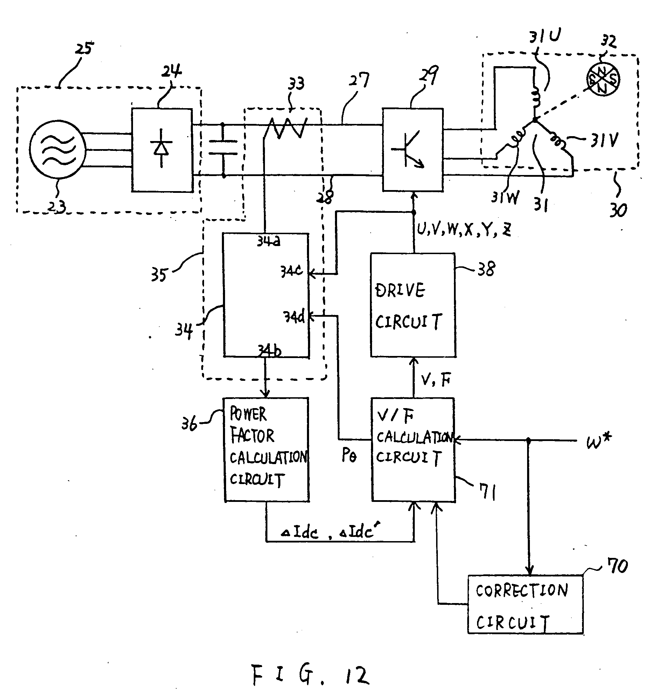

A third embodiment of this invention will now be described with referenece to Figs. 7 through 11.

Parts which are the same as in Fig. 1 are given the same refernce numerals.

As shown in Fig. 7, the main circuit functions are that a three-phase AC power source 23 is converted to DC by a rectifier circuit 24 and capacitor 25, and this DC is converted to AC by an inverter circuit 26 in order to drive brushless motor 30. The control unit consists of: a current detector 33 that detects the current in the DC part of inverter circuit 26; a current detection circuit 34 that amplifies the detected current from this current detector 33 and performs waveform shaping by a sampling and hold action; a power factor calculating circuit 36 that calculates the power factor from the output signal of this current detection 34; a current mean value calculation circuit 60 that calculates the mean value of the output signal from current detection circuit 34; a V/F calculation circuit 61 that calculates the V/F control amount from at least one of the results calculated by power factor calculation circuit 36 and current mean value calculation circuit 60; and a drive circuit 38 that outputs a control signal to a switching element, for example a transistor (not shown) of inverter circuit 26, based on the control amount generated by this V/F calculation circuit 61.

In this embodiment constructed as above, the current flowing in the DC link section in which conversion is effected from DC to AC is detected by current detector 33, and the detected value is sent to current detection circuit 34, where waveform shaping is carried out by performing an amplification and sampling and holding action. Since a difference of power factor is produced, in order to effect operation with a power factor of approximately 1, as described above, it is necessary to control the difference (Ib - Ia) of the DC currents to zero. (In the case of a cage-type induction motor (Ib -Ia) is controlled to an arbitrary value so as to allow an arbitrarily selectable input power factor).

Power factor calculation circuit 36 therefore calculates the power factor in terms of a difference of currents just as in the first and second embodiments described above.

Since the amount by which the DC current changes is detected at intervals of an electric angle of 60 degrees of the output frequency, in calculation of the power factor, the previously detected change is held for an interval of electric angle 60 degerees.

Accordingly, current mean value calculation circuit 60 inputs the current signal obtained from current detection circuit 34, finds the mean value of the current and continuously calculates the change of current in said interval of electric angle 60 degrees, thereby generating a control amount which it inputs to the V/F calculation circuit 61 constituting the next stage.

By the above operation, loss of synchronization can be prevented and stable control achieved even under abrupt load changes in the low frequency range, since current change (which may be approximated to by power change) is constantly being detected.

Next, this current mean value calculation circuit 60 will be described in detail with reference to the drawings.

In Fig. 8, when, during operation at point A on curve (a), the load increases, so that operation shifts to curve (b), voltage control by power factor calculation is not performed during the interval corresponding to an electric angle of 60 degrees, so, although operation shifts from point A to point B, during this time, current mean value calculation circuit 60 increases the inverter output current from I1 to I3, with the result that an amount DELTA V (very small voltage - V2 - V1) is added to the output voltage V i.e. control is performed that effects a shift of operation from point B on curve (b) to point C.

The method of adding this DELTA V will now be described wiht reference to Figs. 9 through 11.

During the interval corresponding to electric angle 60 degrees, the point at which the power factor becomes approximately 1 cannot be found, so operation is effected such that the inverter output current during this period is a minimum, by adding a suitable DELTA V determined in accordance with the amount of change of inverter output current.

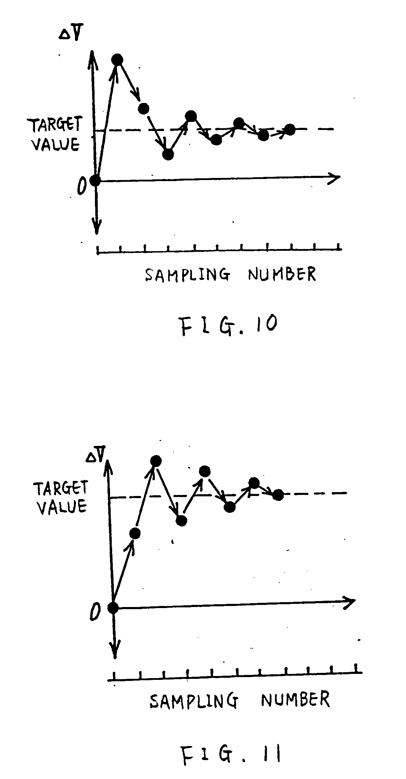

For example, Fig. 9 is an example in which the value of the DELTA V that is added is varied such that the inverter output current converges to a minimum target value. The current decreases and increases in a repetitive manner each time DELTA V is applied, as it converges to the target value. In Fig. 10, successive additions of DELTA V cause the current to increase, decrease, then decrease, this sequence being repeated thereafter. Apart from this, various methods of making the above-mentioned DELTA V converge to a target value have been considered. However, in terms of power factor, the most stable type of control is obtained by shifting operation as far as possible from a lag power factor to a point at which the power factor becomes approximately 1.

As described above, with this embodiment, it is possible to prevent loss of synchronization even when there is an abrupt change of load during the electric angle interval of 60 degrees, i.e. in a region in which the power factor cannot be detected, by using current mean value calculation circuit 60 to apply suitable voltage values (i.e. suitable in that they make the current a minimum). In the case of a cage type mtor, control response to abrupt changes in load can likewise be improved.

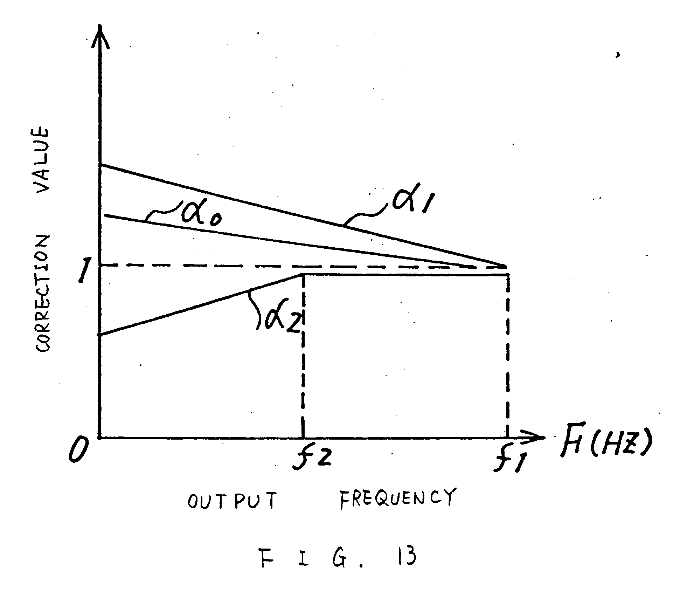

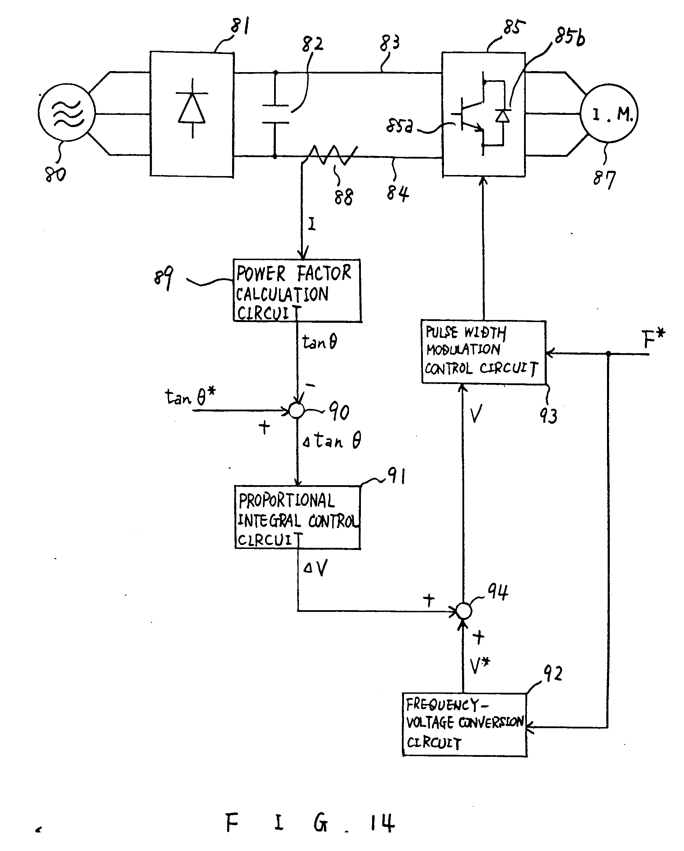

Next, a fourth embodiment of this invention will be described with reference to Fig. 12 and Fig. 13.

Parts which are the same as in Fig. 7 are given the same reference numerals.

As shown in Fig. 12, the main circuit layout in this embodiment is as follows. For drive control of the permanent magnet type motor 30, a three-phase AC power source 23 isconverted to DC by a rectifier circuit 24 and capacitor 25. This DC is converted to AC by an inverter circuit 26 and used to drive motor 30. The layout of this control unit consists of: a current detector 33 that detects the current on the DC side of inverter circuit 26; a current detection circuit 34 that performs wave form shaping by an amplification and sampling and hold action etc. on the detection current from this current detector 33; a power factor calculation circuit 36 that calculates the power factor based on the output signal from this current detection circuit 34; a correction circuit 70 that calculates the prescribed control gain from a speed command value omega*; a V/F calculation signal 71 that calculates the V/F control amount from the speed command value omega * and the calculation results of power factor calculation circuit 36 and correction circuit 70; and a drive circuit 38 that outputs a control signal to the transistors (not shown) that are the switching elements of inverter circuit 26, based on the control amount generated by this V/F calculation circuit 71.

With such a circuit layout, when the current flowing in the DC link that converts the DC to AC is detected by current detector 33 and waveform shaping is performed by inputting this to current detection circuit 34 and performing an amplidication and sampling and hold action etc. a differenceof power foactor is created. It is therefore necessary to control the difference of the DC current (Ib - Ia) such that it becomes zero, in order to operate with a power factor of approximately 1. Power factor calculation circuit 36 therefore calculates this current difference as a power factor.

This difference is input to V/F calculation circuit 71. V/F calculation circuit 71 also receives the value obtained from correction circuit 70.

This correction circuit 70 also receives the speed command value omega*, which is a means of altering the control gain of V/F calculation circuit 71 in accordance with the speed.

This operation will now be described with reference to Fig. 13.

V/F calculation circuit 71 performs voltage control and frequency control for example in accordance with the following equations in the same way as in the previous embodiments.

$$V1 = V1* + K3 \times DELTA\ Idc' + V2 \quad (11)$$
$$[V2 = V2 + K4 \times DELTA\ Idc'] \quad (12)$$

(V1: output voltage, V1*: command voltage, DELTA Idc': change of DC current corresponding to power factor, V2: integrated value, K3: proportional gain constant, K4: integrated gain constant)

$$F1 = F1* + K5 \times DELTA\ Idc' \quad (13)$$

(F1: output frequency, F1*: command frequency, K5* proportional gain constant)

This indicates that the voltage control is proprotional integral control, while the frequency control is proportional control.

Control gains (K3, K4, K5) are constants, but these control gains are made variable by correction circuit 7 as described above.

For example, Fig. 13 shows the correction for output frequency of the drive device. The correction amounts can be altered to any desired values in accordance with output frequency.

The control gains given above are therefore substituted as follows:

$$K3' = K3 \times a0 \quad (14)$$
$$K4' = K4 \times a1 \quad (15)$$
$$K5' = K5 \times a2 \quad (16)$$

Voltage control and frequency control are therefore carried out in accordance with the following equations:

$$V1 = V1* + K3' \times DELTA\ Idc' + V2 \quad (17)$$
$$[V2 = V2* + K4' \times DELTA\ Idc'] \quad (18)$$
$$F1 = F1* + K5' \times DELTA\ Idc' \quad (19)$$

With the above method, as the output frequency rises the control gain corresponding to for example K3' falls, since 0 gets smaller (a1 shows the same behaviour). In contrast, a2 increased with increased output frequency, and is made to have a fixed value between f2 and f1. In low frequency operation (low speed operation), the gain of the voltage control is therefore high, while the gain of the frequency control is low. This therefore improves response to load fluctuations.

Thus the various control gains can be altered to any desired values.

If for example a0, a1, and a2 are each set to 1, a system results which is identical to the prior art system.

Thus, with this embodiment, controllability at each frequency can be altered by setting the correction amounts of correction circuit 70 to any desired values, determined in accordance with the electric motor and/or load which are to be controlled.

It should be noted that, although, in this embodiment, the correction amounts were made proportional and inversely proportional to frequency, the invention is not restricted to this, and these correction amounts could be set to any desired value. In addition, it could be arranged for these values to show hysteresis when the frequency rises or when the frequency drops.

Next, an embodiment wherein this invention is applied to a three-phases induction motor will be described.

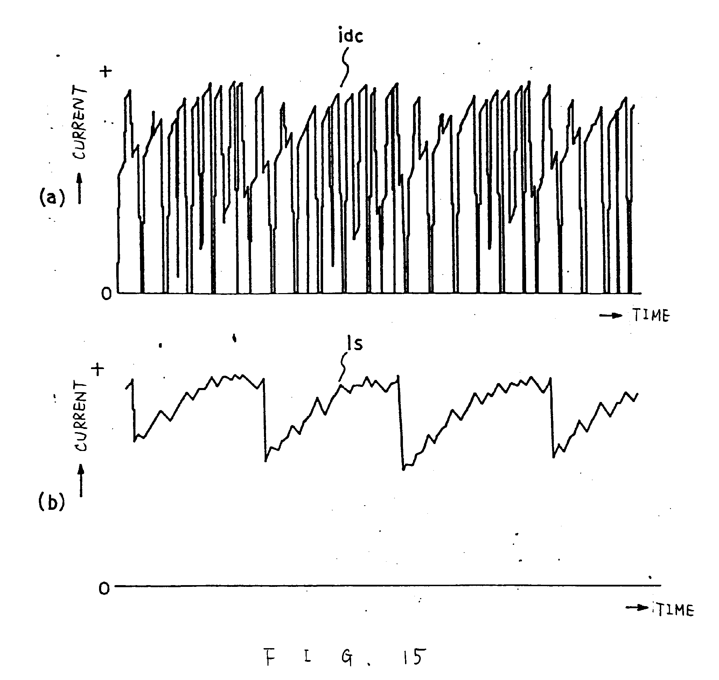

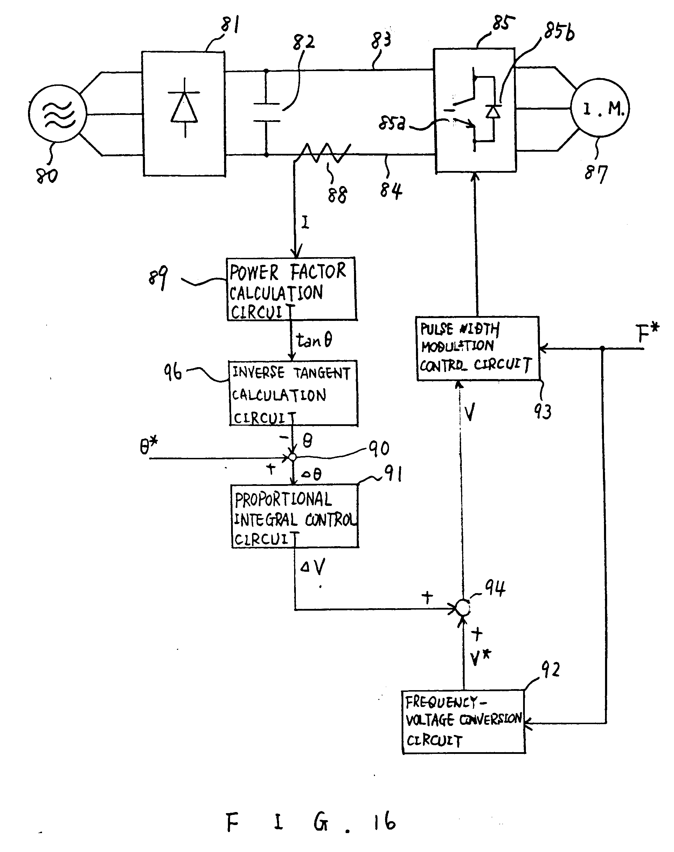

This fifth embodiment will be described below with reference to Fig. 14 and Fig. 15.

First of all, the overall layout will be described with reference to Fig. 14. 80 is a three-phase AC power source. A full wave rectifier circuit 81 pexforms full wave rectification on the three-phase AC voltage from this three-phase AC power source 80. A smoothing capacitor 82 smooths the rectified voltage from this full wave rectification circuit 81 to produce a DC voltage which As applied between DC buses 83 and 84. 85 is a main inverter circuit, to the input terminals of which is applied the CD voltage between these DC buses 83 and 84. These elements together constitute a voltage type PWM inverter 86. Main inverter circuit 85 is constituted of a plurality of switching elements e.g. six power transistors 85a connected in a three-phases bridge connection, diodes 85b being connected in anti-parallel to each of (these power transistors 85a, three-phase AC voltage being supplied from their output terminals to three-phase induction motor 87. A current detection circuit 88 is comprised a Hall CT as current detection means. This detects the current Idc flowing in DC bus 84 of inverter 86 and outputs a detection current 1 in response to it. A power factor calculation circuit 89 has the detection current I from current detection circuit 88 supplied to its input terminal and performs a calculation as will be described, as a result of which it outputs from its output terminal the tangential component tan θ of the power factor angle θ. A sub tractor 90 has the tangential component tan θ from power factor calculation circuit 89 supplied to its negative (-) input terminal, and the tangential component tan θ∗ of power factor angle command value θ * supplied to its positive (+) input terminal, end, as a result, outputs the difference of these, DELTA tan θ, from its output terminal. A proportional integral (PI) control circuit 91 has the difference DELTA tan θ, from subtractor 90 supplied to its input terminal, and outputs from its output terminal a voltage correction value DELTA V. An adder 94 receives at one of its positive (+) input terminals the voltage correction value DELTA V from proportional integral control circuit 91. and which receives at its other positive (+) input terminal the voltage command value V* from frequency-voltage (V/F) conversion circuit 92, as a result of which it outputs voltage command value v from its output terminal. In this case, frequency-voltage conversion circuit 92 receives at its input terminal frequency command value F* and outputs from its output terminal a voltage command value V* corresponding to frequency command value F*. 93 is a pulse width modulation (PWM) control circuit. This receives at one of its input terminals the voltage command value V from the adder 94, and receives at its other input terminal frequency command value F*. It generates from its output terminal a pulse width modulation signal corresponding to valtage command value V and frequency command value F*, and supplies this to the base of power transistor 85a of main inverter circuit 85 as a drive signal. Inverter control means 95 is constituted by the adder 90, the proportional integral control circuit 91, the frequency-voltage conversion circuit 92, the pulse width modulation control circuit 93 and the adder 94 described above.

Next, the operaiton of this embodiment will be described with reference to Fig. 15.

On initial start-up of three-phase induction motor 87, frequency command value F* is supplied to pulse width modulation control circuit 93. Also, frequency command value F* is converted to a voltage command value V* by frequency-voltage conversion circuit 92, and this voltage command value V* is supplied through adder 94 as voltage command value V to pulse width modulation control circuit 93. In response to this, pulse width modulation control circuit 93 outputs a pulse width modulation signal corresponding to voltage command value V (V*) and frequency command value F* as a drive signal and supplies it to the base of power transistor 85a to inverter circuit 85. In response to this, inverter circuit 85 performs a switching action, as a result of which it outputs three-phase AC voltage of output voltage and output frequency corresponding to the aforementioned voltage command value V and frequency command value F*. This is supplied to the three phase induction motor. Current therefore flows in each phase of the three-phase induction motor 87 and a current Idc flows as shown in Fig. 15(a) in the DC bus 84 of inverter 86. This current Idc is detected by current detection circuit 88, and a detection current 1 corresponding to this is supplied to power factor calculation circuit 89.

Since the current Idc is the current flowing in DC bus 84 when one of the three-phase currents (depending on the switching condition of inverter circuit 85) flowing in three-phase induction motor 87 is selected, it is possible to detect one phase of the current flowing in three phase induction motor 87 by extracting it by sampling this at a specific timing obtained from the output pulse modulation voltage waveform. Also, when current Idc is sampled, a sampled waveform Is as shown in Fig. 15(b) is obtained, assuming that this samples phase is successively switched only during a period of 60 degrees of the voltage phase peak. Thus, the timing with which sampling is performed is synchronized with the output pulse width modulation voltage, so, if the power factor is 1, the sampled waveform Is is the waveform obtained by full wave rectification of the three-phase current flowing in three-phase induction motor 87, and is a continuous waveform. However, in the ordinary case of a lagging power factor, the sampled waveform Is, as shown in Fig. 15(b), is a waveform which As discontinuous at the time-point of the phase chageover. The current values before and after the time-point of this phase changeover are in close relationship with the power factor, so they can be formalized as follows, assuming that the three-phase current flowing in the three-phase induction motor 87 is a symmetrical sine wave.

Specifically, assuming that the current value immediately before the time-point of the phase changeover is Ia, and the current value immediately after it is Ib, θ is the power factor angle (taking lagging angles as positive), and IM is the peak value of the current flowing in the three-phase induction motor 87, we have:

$$Ia = IM \times \cos(\theta - 30 \text{ degrees}) \quad (20)$$
$$Ib = IM \times \cos(\theta + 30 \text{ degrees}) \quad (21)$$

Calculating (Ia - Ib)/(Ia + Ib) from these equations (20) and (21), we have:

$$\tan\theta = \sqrt{3} \times (Ia - Ib)/(Ia + Ib) \quad (22)$$

That is, the power factor con be determined independently of the current IN of the three-phase induction motor 87. Power factor calculation circuit 89 performs the calculation of equation (22) after the above-mentioned sampling waveform Is has been obtained. However, it must be pointed out that if the power factor θ is 90 degrees. (Ia + Ib) in equation (23) becomes zero, making this equation impossible to calculate. Even if the power factor angle θ does not reach 90 degrees, if it is sufficiently large, errors in current detection have a disproportionate effect on the results of the power factor calculation. In this embodiment therefore the range of setting of the poower factor an-

gle command value $\theta*$ is specified to be not more than 60 degrees (for example, 45 ), i.e. a restriction is imposed such that the power factor angle $\theta$ does not get too large.

The tangential component tan $\theta$ of the power factor angle calculated by power factor calculating circuit 89 As suplied to subtractor 90, and this subtractor 90 performs a subtraction:

$$\tan \theta * - \tan \theta = DELTA \tan \theta,$$

and outputs the difference DELTA tan $\theta$ . When proportional integral control circuit 91 receives the difference DELTA tan $\theta$ from substractor 90. it outputs a voltage correction value DELTA V such that difference DELTA tan $\theta$ asymptotically approaches zero, as will be described. This is added to the voltage command value V* by adder 94 and output as the voltage command value V (= V* + DELTA V) after correction. In the case of three-phase inductive motor 87, when the ratio of voltage to frequency rises, the exciting current increases, causing the phase lag of the current with respect to the voltage to become large, with the result that the power factor angle $\theta$ increases. Consequently. In proportional integral control circuit 91, when the tangential part tan $\theta$ of power factor angle $\theta$ becomes too much (larger than the tangential part tan $\theta$ * of power factor angle command value $\theta*$, voltage correction value DELTA V is made small, and, in contrast, when tangential part tan $\theta$ becomes too much larger than tangential part tan $\theta*$, voltage correction value DELTA V is controlled so that it becomes larger. In this way, in inverter circuit 85, the output voltage is controlled by pulse width modulation such that the tangential part tan $\theta$ is equal to the tangential part tan $\theta*$ i.e. the power factor angle $\theta$ is equal to the power er factor angle command value $\theta*$.

With this embodiment, the following benefits can be obtained. Specifically, by detecting the current Idc flowing in DC bus 84 of inverter 86 by means of current detection circuit 88, the output voltage of inverter circuit 85 is controlled by power factor calculation circuit 89 in accordance with the detection current I of detection circuit 88, such that the detection current I of detection circuit 88, such that the tangential part tan $\theta$ of the power factor angle $\theta$ is equal to the tangential part tan $\theta*$ of the power factor angle command value $\theta*$. In contrast to the prior art, power factor control can therefore be achieved based on the current flowing in the three-phase induction motor 87 rather than on the change in power. Inverter 86 can therefore control in a stable manner the drive of three-phase induction motor 87 even in low speed operation. Sufficient accuracy is obtained even in low speed operation, due to the elimination of elements depending on speed of operation of three-phase induction motor 87 from the control system. In particular, it is well known that for the commonly employed inductive motors, torque efficiency is a maximum in the vicinity of a power angle $\theta$ of 45°. Operation with high torque efficiency can therefore be achieved by using the inverter control means 95 to control the power factor angle $\theta$ such that it is equal to a power factor angle command value $\theta*$ (e.g. 45 degrees) of less than 60 degrees. Furthermore, with such control of the power factor angle $\theta$ , It is easy to set the power factor angle command value $\theta$ * such that the power factor angle $\theta$ does not got lower than a prescribed value. Under heavy load etc., it is therefore possible to prevent loss of speed due to overcurrent, since It is possible to prevent the slippage of the three-phase induction motor 87 shifting to on excessively high slippage condition above the maximum torque point.

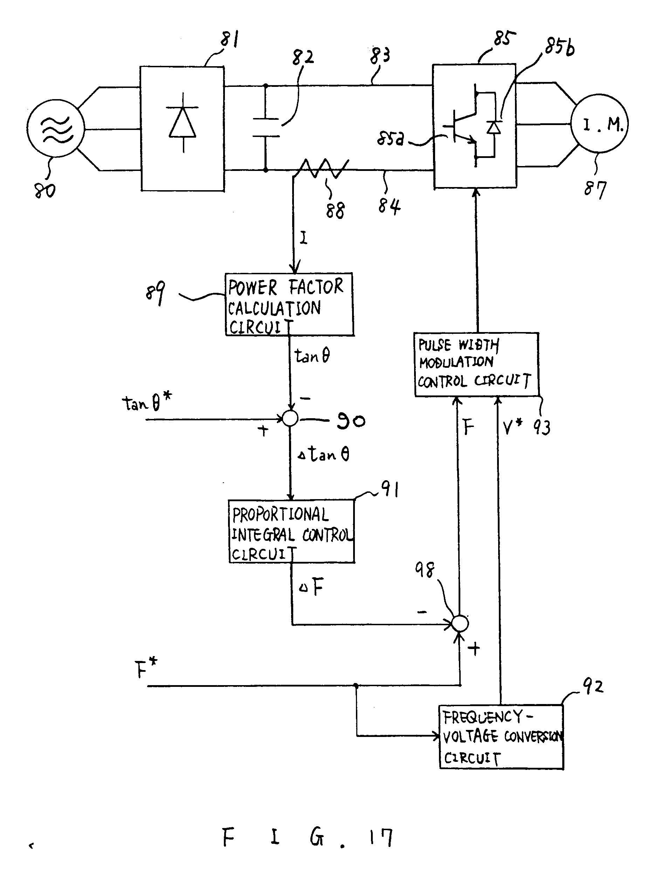

Fig. 16 shows a sixth embodiment of this invention. Parts which are the same as in Fig. 14 are given the same reference numerals, and only the parts which are different will be described hereinbelow.

Specifically, 96 is an inverse tangent (tan-1) calculation circuit. This receives at its input terminal the tangential component tan $\theta$ from power factor calculation circuit 89. This inverse tangent calculating circuit 96 converts the tangential component tan $\theta$ that it receives as input into a power factor angle $\theta$, which it outputs from its output terminal. This power factor angle $\theta$ is then supplied to the negative (-) input terminal of subtractor 90. Instead of tangential component tan $\theta*$, the positive (+) input terminal of subtractor 90 is supplied with power factor angle command value $\theta$ *, so subtractor 90 outputs the difference of these i.e. DELTA $\theta$(= $\theta*$ - $\theta$) from its output terminal, and supplies this defference to proportional integral control circuit 91.

Proprotional integral control circuit 91 outputs a voltage correction value DELTA $\theta$ such that this difference DELTA$\theta$ asymptotically approaches zero.

The same benefits ore therefore obtained by this sixth embodiment as by the fifth embodiment described above.

Fig. 17 shows a seventh embodiment of this invention. Parts which ore the same as in Fig. 14 ore given the same reference numerals, and only those parts which ore different ore described below.

Specifically, 97 is a proportional integrol control circuit replacing proportional integrol control circuit 91. Its input terminal is supplied with difference DELTA tan from subtractor 90, and the circuit outputs frequency correction value DELTA F. A subtractor 98 receives at its negative (-) input terminal frequency correction value DELTA F, and, at its positive (+) input terminal, frequency command value F*, and outputs fro: its output terminal frequency command value F (= F* -DELTA F). One input terminal of pulse width modulation control circuit 93 is suplied with frequency command value F, while its other input terminal is directly with voltage command value V* from frequency-voltage conversion circuit 92.

Thus, pulse width modulation control circuit 93 controls inverter circuit 85 in accordance with voltage command value V* and frequency command value F, such that it outputs a three-phase AC voltage of output voltage and output frequency corresponding to these. integral control circuit 97 outputs a frequency correction value DELTA F such that the difference DELTA tan θ asymptotically approaches zero.
In this embodiment therefore the same effect as in the embodiment of Fig. 5 is achieved by controlling the output frequency of inverter circuit 85 such that power factor angle θ is equal to power factor angle command value θ*.

The seventh embodiment is particularly effective when the power factor angle θ needs to increased when the output voltage has reached its maximum. It may therefore be used in combination with for example the fifth embodiment, in a layout wherein switching is effected such that the fifth embodiment is used below the base speed, and the seventh embodiment is used in the fixed output operating condition at speeds in excess of the base speed.

Although the invention has been described above with reference to specific embodiments, this invention is not restricted to the embodiments described above and illustrated in the drawings. For example, it is not restricted to three-phase motors but could be applied to other A.C. motors such as multi-phase brushless motors or induction motors in general, and could of course be put into practice in various modified ways within the scope of the appended claims.

## Claims

1. A control device for an AC motor (30) comprising a source of DC power (25) and inverter means (29) for converting said DC power into AC power and supplying the AC voltage to the AC motor (30),
   DC current detection means (33) adapted to detect the current flowing from said DC power source (25) to said inverter means (29) in the DC side of said inverter means (29);
   power factor calculation means (36) connected to said DC current detection means (33) for calculating the power factor of the AC motor (30) from the detected current and producing a corresponding power factor signal;
   voltage and frequency calculating means (37) which receives as input signals the calculated power factor signal and a speed setting signal and produces said control signals calculated from the input signals;
   control means (38) which receives said control signals and generates said drive signals to control the inverter means (29) based on the control signals;
   characterized by sample and hold signal generating means (34) that generates a sample and hold signal from control signals from voltage and frequency calculating means (37) and drive signals from control means (38), wherein said drive signals are inverted at a prescribed phase angle determined by the output frequency of said inverter means (29);
   current sample and hold means that samples and holds the DC current signal from said DC current detection means under the control of said sample and hold signal.

2. A control device for an AC motor according to claim 1 further characterized by;
   mean value calculation means (60) for calculating the mean value of the signal from said current detection means (35); wherein said voltage and frequency calculation means (37) generates a voltage signal and frequency signal based on at least one of the power factor signal and the calculation result of said mean value calculation means (60).

3. A control device for an AC motor according to claim 1 or claim 2, characterized in that said power factor calculation means (36) calculates the power factor of said AC motor (30) from current values detected before and after the point of phase switching by said current detection means (35).

4. A control device for an AC motor (87) comprising a source of DC power (81) and inverter means (85) for converting said DC power into AC power and supplying the AC voltage to the AC motor (87);
   current detection means (88) for detecting the current flowing from said DC power source (81) to said inverter means (85) and generating a signal representative of the current flow;
   power factor calculation means (89) connected to the current detection means (88) for calculating the power factor of the AC motor (87) from the detected current and producing a corresponding power factor signal;
   characterized by adder means (90) for receiving the power factor signal and adding to it a predetermined signal;
   proportional integrating means (91) for proportionally integrating the output of the adder means (90);
   voltage frequency calculation means which receives a predetermined reference signal and generates a reference voltage signal;
   control means (93) which receives the output of the proportional integrating means (91), the reference voltage signal, and the predetermined reference signal and produces a control signal to control the inverter means (85).

## Patentansprüche

1. Steuerungsvorrichtung für einen Wechselstrom-Motor (30), mit einer Gleichspannungs-Energiequelle (25) und einer Wechselrichtereinrichtung (29), um die Gleichspannungs-Energie in Wechselspannungs-Energie umzuwandeln und den Wechselstrom-Motor (30) mit Wechselspannung zu speisen,

einer Gleichstrom-Erfassungseinrichtung (33), die dazu ausgestaltet ist, um auf der Gleichstromsete der Wechselrichtereinrichtung (29) den von der Gleichspannungs-Energiequelle (25) zur Wechselrichtereinrichtung (29) fließenden Strom zu erfassen;

einer Leistungsfaktor-Berechnungseinrichtung (36), die mit der Gleichstrom-Erfassungseinrichtung (33) verbunden ist, um aus dem erfaßten Strom den Leistungsfaktor des Wechselstrom-Motors (30) zu berechnen und um ein entsprechendes Leistungsfaktorsignal zu erzeugen;

einer Spannungs- und Frequenz-Berechnungseinrichtung (37), die als Eingangssignale das berechnete Leistungsfaktorsignal und ein Drehzahl-Einstellsignal empfängt und die Steuersignale erzeugt, die aus den Eingangssignalen berechnet werden;

einer Steuerungseinrichtung (38), die die Steuersignale empfängt und die Aktivierungssignale erzeugt, um basierend auf den Steuersignalen die Wechselrichtereinrichtung (29) zu aktivieren;

**gekennzeichnet durch**

eine Generatoreinrichtung (34) für Abtast- und Haltesignale, die aus Steuersignalen von der Spannungs- und Frequenz-Berechnungseinrichtung (37) und aus Aktivierungssignalen von der Steuerungseinrichtung (38) ein Abtast- und Haltesignal erzeugt, wobei die Aktivierungssignale mit einem vorbestimmten Phasenwinkel invertiert werden, der aus der Ausgangsfrequenz der Wechselrichtereinrichtung (29) bestimmt wird;

eine Strom-Abtast- und Halteeinrichtung, die das Gleichstromsignal von der Gleichstrom-Erfassungseinrichtung unter Steuerung durch das Abtast- und Haltesignal abtastet und speichert.

2. Steuerungsvorrichtung für einen Wechselstrom-Motor nach Anspruch 1, weiterhin **gekennzeichnet durch:**

eine Mittelwert-Berechnungseinrichtung (60) zur Berechnung des Mittelwertes des Signals von der Strom-Erfassungseinrichtung (35), wobei die Spannungs- und Frequenz-Berechnungseinrichtung (37) ein Spannungssignal und ein Frequenzsignal erzeugt, das auf dem Leistungsfaktorsignal und/oder dem Berechnungsergebnis der Mittelwert-Berechnungseinrichtung (60) basiert.

3. Steuerungsvorrichtung für einen Wechselstrom-Motor nach Anspruch 1 oder 2, **dadurch gekennzeichnet,** daß die Leistungsfaktor-Berechnungseinrichtung (36) aus Stromwerten, die vor und nach dem Punkt der Phasenumschaltung durch die Strom-Erfassungseinrichtung (35) erfaßt werden, den Leistungsfaktor des Wechselstrom-Motors (30) berechnet.

4. Steuerungsvorrichtung für einen Wechselstrom-Motor (87), mit einer Gleichspannungs-Energiequelle (81) und einer Wechselrichtereinrichtung (85), um die Gleichspannungs-Energie in Wechselspannungs-Energie umzuwandeln und den Wechselstrom-Motor (87) mit Wechselspannung zu speisen;

einer Strom-Erfassungseinrichtung (88) zum Erfassen des Stromes, der von der Gleichspannungs-Energiequelle (81) zur Wechselrichtereinrichtung (85) fließt, und zum Erzeugen eines Signals, das diesen Strom darstellt;

einer Leistungsfaktor-Berechnungseinrichtung (89), die mit der Strom-Erfassungseinrichtung (88) verbunden ist, um aus dem erfaßten Strom den Leistungsfaktor des Wechselstrom-Motors (87) zu berechnen und ein entsprechendes Leistungsfaktorsignal zu erzeugen;

**gekennzeichnet durch** eine Additionseinrichtung (90), um das Leistungsfaktorsignal zu empfangen und dieses zu einem vorbestimmten Signal zu addieren;

eine proportional integrierende Einrichtung (91), um den Ausgang der Additionseinrichtung (90) proportional zu integrieren;

eine Spannungs- und Frequenz-Berechnungseinrichtung, die das vorbestimmte Referenzsignal empfängt und ein Referenz-Spannungssignal erzeugt;

eine Steuerungseinrichtung (93), die den Ausgang der proportional integrierenden Einrichtung (91), das Referenz-Spannungssignal und das vorbestimmte Referenzsignal empfängt und ein Steuersignal erzeugt, um die Wechselrichtereinrichtung (85) zu steuern.

## Revendications

1. Dispositif de régulation pour un moteur à courant alternatif (30), constitué par une source d'alimentation de courant continu (25) et par un moyen d'inversion (29) pour convertir le courant continu d'alimentation en courant alternatif d'alimentation pour alimenter cette tension alternative aux bornes du moteur à courant alternatif (30),

un moyen de détection d'intensité continue (33) étudié pour détecter l'intensité du courant qui circule entre cette source d'alimentation en courant continu (25) et le moyen d'inversion (29) du côté courant continu de ce moyen d'inversion (29);

un moyen de calcul du facteur de puissance (36) branché sur le moyen de détection d'intensité continue (33) pour calculer le facteur de puissance du moteur à courant alternatif (30) à partir de l'intensité détectée et pour produire le signal de facteur de puissance correspondant;

un moyen de calcul de tension et de fréquence (37) alimenté par (i) le signal de facteur de puissance produit et (ii) un signal de réglage de la vitesse, et qui génère les signaux de contrôle en question calculés à partir des signaux qui lui sont transmis;

un moyen de contrôle (38) alimenté par ces signaux de contrôle et qui génère des signaux d'attaque pour contrôler le moyen d'inversion (29), ces signaux d'attaque étant fonction des signaux de contrôle;

caractérisé par un moyen de génération de d'échantillon et de maintien (34) qui produit un signal échantillon et de maintien à partir des signaux de contrôle produits par le moyen de calcul de tension et de fréquence (37) et des signaux d'attaque produits par un moyen de contrôle (38), dans lequel ces signaux d'attaque sont inversés à un angle de phase déterminé qui est fonction du signal de fréquence produit par le moyen d'inversion (29);

un moyen de génération d'échantillon d'intensité et de maintien qui échantillonne et maintient le signal d'intensité continue à partir du signal produit par le moyen de détection d'intensité continue sous le contrôle du signal échantillon et de maintien en question.

2. Dispositif de régulation pour un moteur à courant alternatif selon la revendication 1 caractérisé en outre par:

un moyen de calcul d'une valeur moyenne (60) pour calculer la valeur moyenne du signal produit par le moyen de détection d'intensité (35); dans lequel le moyen de calcul de tension et de fréquence génère un signal de tension et un signal de fréquence basés sur au moins un des signaux de facteur de puissance et sur le résultat du calcul effectué par le moyen de calcul de valeur moyenne (60).

3. Dispositif de régulation pour un moteur à courant alternatif selon la revendication 1 ou la revendication 2 ci-dessus, caractérisé par le fait que le moyen de calcul du facteur de puissance (36) calcule le facteur de puissance du moteur à courant alternatif (30) à partir des signaux d'intensité détectés avant et après le point de commutation de phase par le moyen de détection d'intensité (35).

4. Dispositif de régulation d'un moteur à courant alternatif (87) comprenant une source d'alimentation en courant continu (81) et un moyen d'inversion (85) pour convertir cette alimentation de courant continu en alimentation de courant alternatif et alimenter le moteur à courant alternatif (87) avec cette alimentation de courant alternatif;

un moyen de détection d'intensité (88) pour détecter l'intensité du courant qui circule de la source d'alimentation de courant continu (81) au moyen d'inversion (85) et générer un signal représentatif de cette intensité;

un moyen de calcul du facteur de puissance (89) branché sur le moyen de détection d'intensité (88) pour calculer le facteur de puissance du moteur à courant alternatif (87) à partir du signal de l'intensité détectée et pour produire le signal du facteur de puissance correspondant;

caractérisé par un moyen additionneur (90) alimenté par le signal de facteur de puissance qui ajoute ce signal à un signal prédéterminé;

un moyen d'intégration proportionnelle (91) pour intégrer proportionnellement le signal de sortie du moyen additionneur (90);

un moyen de calcul de fréquence de tension alimenté par un signal de référence prédéterminé et qui produit un signal de référence de tension;

un moyen de contrôle (93) alimenté par le signal de sortie du moyen d'intégration proportionnelle (91) et par le signal de référence de tension et par le signal de référence prédéterminé pour produire un signal de contrôle pour contrôler le moyen d'inversion (85).

FIG . 1

F I G . 2

Pθ

U
V
W
X
Y
Z

34d

34c

52

SH

50

Idc → 34a

Idc'

Ia

Ib

34b

51

I →

F I G . 3

A(Ia)  B(Ib)  Idc

+

(a)

0 ———→ TIME

+

Idc

(b)

0 ———→ TIME

+

Idc

(c)

0 ———→ TIME

0  60°  120°  180°  240°  300°  360° ( PHASE ANGLE )

F I G . 4

F I G . 5

F I G . 6

F I G. 7

F I G . 8

F I G . 9

FIG. 10

FIG. 11

F I G . 12

F I G . 13

F I G . 14

F I G . 15

F I G . 16

F I G . 17

FIG.18 (PRIOR ART)

FIG. 19 (PRIOR ART)

F I G . 2 0